# EUROPEAN PATENT SPECIFICATION

(11) **EP 1 365 845 B1**
(45) Date of publication and mention of the grant of the patent: **12.12.2007**
(21) Application number: 01908182.7
(22) Date of filing: 01.03.2001
(51) Int. Cl.: A63F 13/10

(54) **ENTERTAINMENT DEVICE, MENU DISPLAY METHOD, AND INFORMATION RECORDING MEDIUM**
UNTERHALTUNGSGERÄT, MENÜ-ANZEIGEVERFAHREN, UND INFORMATIONSAUFZEICHNUNGSMEDIUM
DISPOSITIF RECREATIF, PROCEDE D'AFFICHAGE DE MENU ET SUPPORT D'ENREGISTREMENT D'INFORMATION

(43) Date of publication of application: 03.12.2003
(73) Proprietor: Sony Computer Entertainment Inc., Tokyo 107-0052 (JP)
(72) Inventor: TSURUOKA, Taizo, Sony Computer Entertainment Inc., Tokyo 107-0052 (JP)
(74) Representative: Hedley, Nicholas James Matthew
(86) International application number: PCT/JP2001/001551
(87) International publication number: WO 2002/070091

(56) References cited:
- EP-A- 0 775 995
- US-A- 5 743 799
- US-A- 5 951 639
- MICHAEL SPITTLER: "Ordnung ist der halbe PC" PCTIP, February 1998 (1998-02), pages 32-34, Zürich, CH

## Description

### FIELD OF THE INVENTION

This invention concerns an entertainment device that displays a menu for accepting a choice of an application to start, a display method for that menu, and an information recording medium that holds programs for realizing the method.

### BACKGROUND OF THE INVENTION

Game machines, which have been specialized devices for executing game programs, have come to realize, in addition to their previous game execution function, other functions as well, such as audio CD-ROM (Compact Disk - Read Only Memory) playback functions, and they have come to assume a position as comprehensive entertainment devices.

In such an entertainment device that has multiple functions, it is necessary to execute different applications according to the function to be realized. Thus in the display device of a TV (Television) receiver, it is necessary to display a menu screen that shows the functions that are available, to accept a selection from them, and to execute an application according to the selected function. Thus in conventional devices the practice has been to display a menu screen pre-registered in the internal ROM (Read Only Memory) and accept the selection of the function to be realized (that is, the application to be executed).

But this conventional menu display is a fixed one that displays only what has previously been stored in the internal ROM at the time the product is shipped, and it has been impossible to respond dynamically by, for example, changing the display to fit added or altered functions after shipment.

US5951639 discloses an apparatus for selectively downloading different versions of software modules to a variety of potentially different terminals; the differences in the terminals may lie in the hardware or operating system versions or other parameters.Each terminal may include an internal table that identifies the model number of the terminal, the version number of the current operating system, the amount of memory currently installed and the current hardware configuration.

### SUMMARY OF THE INVENTION

It is an object of the present invention to provide a menu display method that allows the display to be changed from time to time in accordance with the functions that can actually be realized. It is another object of the present invention to provide an entertainment device that can display a menu using the above method, and an information recording medium that holds programs for realizing that method.

The present invention is as defined in the accompanying claims.

The entertainment device according to the present invention comprises an operation controller that references application modules that hold application programs for each application, and a menu creation unit that creates and displays a menu of extracted applications and accepts the selection of the application to be started. An entertainment device means a device that executes games or other programs. In this invention, the application modules need not be provided within the entertainment device.The application module holds the required hardware information that is the hardware information necessary for an application to operate, and the operation controller decides whether an application is executable based on information on devices the entertainment device is connected to and required hardware information held in that application module and extracts those applications it judges to be executable.

Also, an application module may hold version information about the application, and the operation controller may, upon detecting multiple application modules in which the same application is registered, extract the new-version application based on the version information. And it can be made so that, upon detecting multiple application modules in which the same application is registered, the operation controller will extract the best application for the present configuration of the device.

The entertainment device may comprise an operation controller that references application modules that hold programs for the application and menu information for menu display and creates a menu information table in which menu information is registered for each application, and a menu creation unit that creates and displays a menu of applications based on the menu information registered in the menu information table and accepts the selection of the application to be started. The menu information can be, for example, two- or three-dimensional image data or programs.

In an embodiment, an entertainment device of the present invention comprises an operation controller that references application modules that hold programs for each application and detects applications, and a menu creation unit that creates and displays a menu of at least some of the detected applications and accepts a selection of the application to be started, wherein the application modules are held in at least one of an external storage medium connected to the entertainment device (that is, a memory card inserted into a slot of the entertainment device, a hard disk drive, a memory device connected to the entertainment device via a communication circuit, etc.), a storage medium mounted on the entertainment device (that is, an optical disk mounted on an optical disk device, etc.), and a storage medium built into the entertainment device (that is, ROM (Read Only Memory), etc.), and the operation controller searches at least one of said external storage medium, said mounted storage medium, and said built-in storage medium and detects application modules.

According to the present invention provides the following methods are used as menu display methods used in each of the aforementioned entertainment devices. These methods are:
(1) a menu display method comprising the steps of: referencing application modules that hold application programs for each application and extracting applications therefrom; and creating and displaying a menu of the extracted applications.
(2) a menu display method comprising the steps of referencing application modules that hold application programs for each application and menu information for menu display; and creating a menu information table in which menu information for each application is registered; and referencing said menu information table and based on the menu information registered in said menu information table, creating and displaying a menu of applications, and
(3) a menu display method in an entertainment device comprising the steps of detecting application modules that hold application programs for each application by searching at least one of an external storage medium connected to the entertainment device, a storage medium mounted on the entertainment device, and a storage medium of a memory device built into the entertainment device, and creating and displaying a menu of at least some of the applications corresponding to the detected application modules.

In addition, the present invention provides a software program as described in the accompanying claims, which may be held on a machine-readable storage medium (for example, optical storage medium, magnetic storage medium, magneto-optic recording medium, ROM, memory card, etc.).

### BRIEF DESCRIPTION OF THE DRAWINGS

Figure 1 is a block diagram of the hardware configuration of an embodiment of the entertainment device of the present invention;
Figure 2 is a functional block diagram of the hardware of the entertainment device;
Figure 3 is a model diagram showing an example of the data structure of an application module;
Figure 4 is a model diagram showing an example of the data structure of the application table and menu information table;
Figure 5 is a model diagram showing an example of the data structure of the device information table;
Figure 6 is a flowchart showing the processing of the operation controller of the embodiment of the entertainment device of the present invention;
Figure 7 is a flowchart showing an example of the processing of application table creation;
Figure 8 is a flowchart showing an example of the processing of menu information table creation;
Figure 9 is a flowchart showing the processing of the menu creation unit of the embodiment of the device of the present invention; and
Figure 10 is an explanatory diagram showing an example of the menu display screen.

### DETAILED DESCRIPTION OF THE PREFERRED EMBODIMENT

In the following, with reference to the drawings, an embodiment of the device of this invention will be described. The device composition, processing procedure, etc. shown in the following working example is only an example, and this invention is not limited to this embodiment.

### A. Hardware configuration

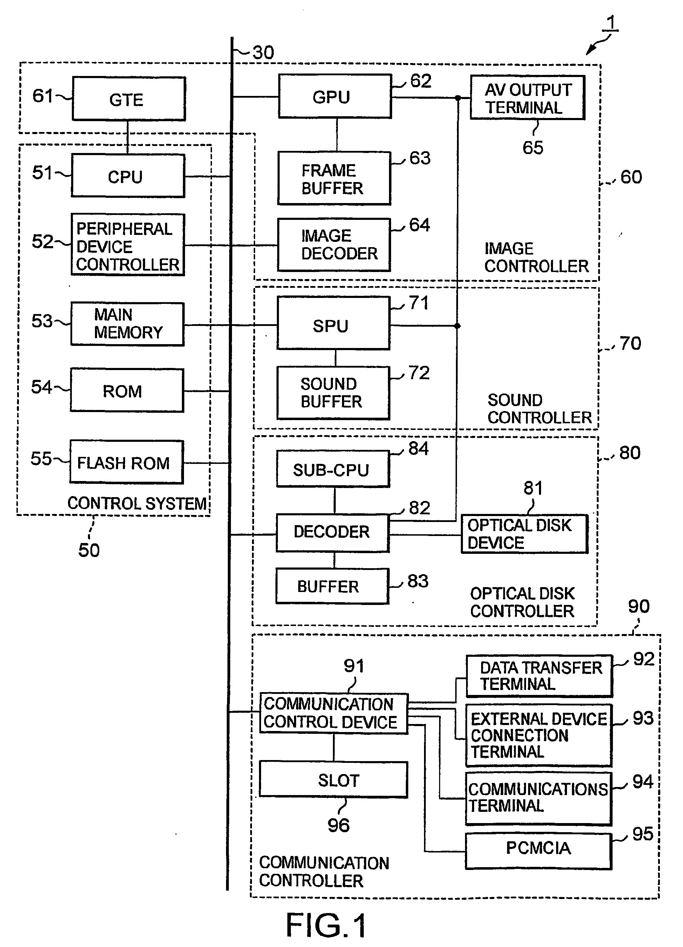

As shown in Figure 1, an entertainment device 1 of the preferred embodiment includes a control system 50, which consists of a central processing unit (CPU) 51 and its peripheral devices, etc., an image controller 60, which consists of a graphic processing unit (GPU) 62, etc. which draws to a frame buffer 63, a sound controller 70, which consists of a sound processing unit (SPU), etc. for generating music, sound effects, etc., an optical storage device controller 80, which reads information from an optical storage medium, a communication controller 90, which controls the input and output of signals, a bus 30, by which each of these units is connected, and a power supply unit (not shown) for supplying electric power to each unit.

### (A-1) Control system 50

Control system 50 includes a peripheral device controller 52, which handles interrupt control and control of direct memory access (DMA) transfers, etc., a main memory 53, which consists of a random access memory (RAM), a ROM 54, in which various programs, etc. are stored, and a rewritable flash ROM 55.

Various programs are held in ROM 54, such as the so-called operating system (OS), which manages and controls the various units of main memory 53, image controller 60, and sound controller 70, as well as applications, etc. for executing games. Flash ROM 55 is a rewritable ROM, in which some of the data used by the OS or applications is held.

CPU 51 is a device that executes programs read into main memory 53 from flash ROM 54,flash ROM 55, an optical disk device 81, etc. CPU 51 controls this entire entertainment device 1 by executing the programs of the operating system previously held in ROM 54 and read into main memory 53 at execution time.

Also, CPU 51 executes games and other applications by executing application programs read into main memory 53.

An application to be executed by CPU 51 may be previously held on an optical disk (CD-ROM, DVD-ROM (Digital Video Disk - Read Only Memory)), read from optical disk device 81, and stored into main memory 53, or what is previously held in ROM 54 or flash ROM 55 may be read into main memory 53, or it may be read in from outside (for example, a removable ROM or flash ROM, etc. such as a memory card connected via a slot 96, an external device connected via an external device connection terminal 93, an external network connected via a communication terminal 94 or a PCMCIA terminal 95, etc.) via communication controller 90 and stored directly or indirectly into main memory 53.

Also, in entertainment device 1 of this embodiment, provided on control system 50 is a peripheral device controller 52 for performing direct data transfer (a so-called DMA transfer), bypassing CPU 51, between main memory 53, a GPU 62, image decoder 64, and a decoder 82, etc. This makes it possible to reduce the load on CPU 51 and do high-speed data transfers in entertainment device 1 of this working example. This peripheral device controller 52 also performs interrupt control.

### (A-2) Image controller 60

Image controller 60 has a geometry transfer engine (GTE) 61, which performs processing such as coordinate transformations; GPU 62, which draws in accordance with drawing instructions from CPU 51; a frame buffer 63, which stores images drawn by GPU 62; an image decoder 64, which decodes image data compressed and encoded by orthogonal transformations such as discrete cosine transformations; and AV (Audio Visual) output terminal 65.

GTE 61 is a device that has, for example, a concurrent operation mechanism that performs multiple mathematical operations in parallel, and performs at high speed such operations as coordinate transformations, light source calculations, and matrix and vector calculations in response to calculation requests from CPU 51. Providing the GTE 61 makes it possible for entertainment device 1 of this working example to reduce the burden on CPU 51 and perform high-speed coordinate operations.

GPU 62, in compliance with drawing orders from CPU 51, creates polygon or other drawing data, stores it in frame buffer 63, and outputs the created drawing data to AV output terminal 65. GPU 62 in this working example is capable of performing flat shading, in which a single triangular-shaped polygon is drawn with the same color; Gouroud shading, in which the color inside a polygon is determined by interpolation from the colors at the polygon's vertices, and texture mapping, in which a polygon is covered with a texture stored in a texture area, and it can draw up to about 7.5 million polygons per second.

Frame buffer 63 is a storage area for holding the data of an image to be displayed; in this working example, it consists of a so-called dual-port RAM (Random Access Memory), which is able to simultaneously carry out drawing from GPU 62 or transfers from main memory 53, and reading for sake of display.

Also, frame buffer 63 in this embodiment has, besides a display image storage area for holding display image data, a CLUT area in which a color lookup table (Color Look Up Table) is stored that is referenced when GPU 62 draws polygons, etc., and a texture area in which are stored materials (textures) that at drawing time are coordinate-transformed and inserted (mapped) into polygons, etc. drawn by GPU 62. The CLUT and texture areas dynamically change as the display region changes.

Image decoder 64 decodes the image data of still pictures or moving pictures stored in main memory 53 and stores the result into main memory 53, under control from CPU 51. The image data generated here can be used as background for images drawn by aforementioned GPU 62, by storing it into frame buffer 63 via GPU 62.

AV output terminal 65 is a terminal for outputting various video, audio, and other signals to a TV receiver or other display device.

### (A-3) Sound controller 70

Sound controller (sound system) 70 has a SPU 71, which generates music and sound effects based upon instructions from CPU 51, and a sound buffer 72, in which waveform data, etc. is recorded by this SPU 71.

SPU 71 has an ADPCM (Adaptive Differential Pulse Code Modulation) decoding function, which generates audio data in which, for example, 16-bit audio data is adaptively encoded as 4-bit difference signals; a playback function that plays back the waveform data stored in sound buffer 72, and a modulation function, which modulates and plays back the waveform data stored in sound buffer 72. Thus sound system 70 can be used as a so-called sampling sound source, which generates music and sound effects based on waveform data recorded in sound buffer 72 under instructions from CPU 51.

### (A-4) Optical disk controller 80

Optical disk controller 80 has optical disk device 81, which plays back the programs and data, etc. recorded on an optical disk; a decoder 82, which decodes programs and data, etc. that have been recorded, for example, with an added error correction code (ECC); and buffer 83, which speeds up the reading of data from the optical disk by temporarily storing data from optical disk device 81. A sub-CPU 84 for calculation processing is connected to decoder 82.

Optical disk device 81 is a device for playing back information (programs, audio data, image data, etc.) held on a CD-ROM, DVD-ROM, or other optical disk. The information read from the optical disk by optical disk device 81 is decoded by decoder 82, then is processed according to the type of information; for example, if it is an application program, it is transferred to main memory 53, etc., if it is audio sound data, it is processed as necessary by digital/analog conversion, etc. by SPU 71 and then is transferred to AV output terminal 65, and if it is AV sound data video data, it is processed as necessary by digital/analog conversion, etc. by GPU 62 and then is transferred to AV output terminal 65.

### (A-5) Communication controller 90

Communication controller 90 has a communication control device 91, which controls communication with CPU 51 done via bus 95; and various terminals 92-94 and slots 95 and 96 for making electrical connection with the outside. Terminals 92-94 and slots 95 and 96 are each electrically connected to communication control device 91.

Data transfer terminal 92 is a terminal for data transfer with the outside; in this working example, it conforms to the IEEE (The Institute of Electrical and Electronics Engineers) 1394 standards. By connecting a digital camera or video deck, etc. to terminal 92 via a cable, one can take into entertainment device 1 the video and audio, etc. held in these devices.

External device connection terminals 93 is a terminal for connecting a keyboard or other input device, a mouse or other pointing device, a printer or other printing device, or an external memory device, etc. that employs a floppy disk, magneto-optic disk or other electromagnetic recording medium; in this working example, it conform to the USB (universal serial bus) standards. In entertainment device 1 of this working example, two of these external device connection terminals 93 are provided.

Communication terminal 94 is a terminal for performing communication with external devices; in this working example, it confirms to the IrDA (Infrared Data Association) standards, which are standards for data communication that makes use of infrared rays. Entertainment device 1 of this embodiment can pass data by infrared communication without connecting it with a cable, etc. if it is done with an external device that has a terminal that conforms to the same standards.

PCMCIA slot 95 is a slot that conforms to the PCMCIA (Personal Computer Memory Card International Association) standards for inserting various card-type peripheral devices such as a modem card. Inserting a modem card into this slot 95 makes entertainment device 1 of this working example capable of communication via the Internet or other public network.

Slot 96 has a controller connection unit (not pictured) for connecting a controller that receives input of instructions from a user and for receiving instruction input signals, and a memory card insertion unit (not pictured) for inserting, and carrying out input and output with, a memory card, which is an external auxiliary memory device for holding data on the game settings and state of progress, etc. Two controller connection units and two memory card insertion units are provided on entertainment device 1 of this working embodiment. Also, in this embodiment, a portable electronic device can also be connected to the memory card insertion unit as an external auxiliary memory device.

The controller connected to the controller connection unit of slot 96 has, for example, 16 instruction keys for inputting instructions from the user, and in accordance with the instructions from communication control device 91, the state of these instructions keys is sent by synchronous communication to communication control device 91 about 60 times per second.

Via communication control device 91, CPU 51 performs input and output of data to the external auxiliary memory device inserted in the memory card insertion unit of slot 96. A memory area for, for example, data indicating the progress and settings of a game, is provided in the external auxiliary memory device. Also, protective circuitry for preventing electrical damage is built into communication control device 91 of this embodiment. The external auxiliary memory devices that are memory cards or portable electronic devices are separated from bus 30 and can be attached and detached while the power to the device main body is turned on. Therefore even if it becomes necessary to replace an external auxiliary memory device due for example to a lack of memory capacity, another one can be inserted instead, without cutting off the power to the device main body.

### B. Functional configuration

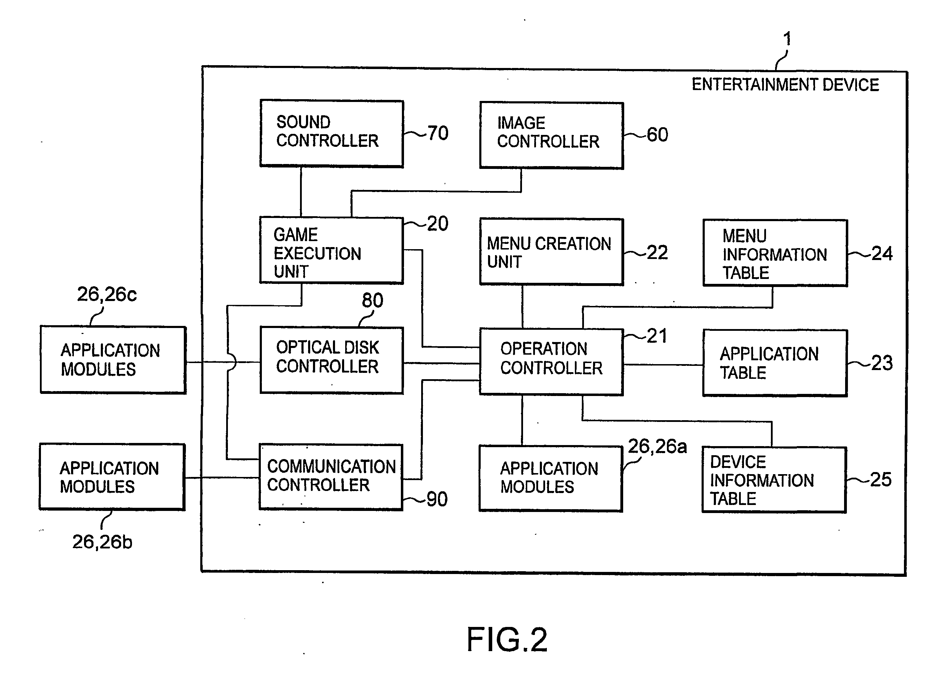

The functional configuration of entertainment device 1 of this embodiment is shown in Figure 2. Entertainment device 1 has an operation controller 21, which controls the overall operations, a menu creation unit 22, which creates a menu of startable applications, a game execution unit 20, which executes game programs, the image controller 60, the sound controller 70, the optical disk controller 80, and the communication controller 90, and an application module is available for each application to be started by the menu created by the menu creation unit. Created in main memory 53 are an application table 23, which is the memory area for holding information on the startable applications, a menu information table 24, which is the memory area for registering applications that do menu display, and a device information table 25, which indicates the peripheral devices, etc. that are connected.

Also, in this embodiment, the game execution unit 20, operation controller 21, and menu creation unit 22 are realized by having CPU 51 execute programs that are previously head in ROM 54 and are read into main memory 53, but this invention is not limited by such means of realization by software; it may also be realized by hardware devices, etc. including hard-wired logic that executes the same steps.

In this embodiment the information recording medium that holds the programs for realizing game execution unit 20, operation controller 21, and menu creation unit 22 is ROM 54, but this invention is not limited to this. For example, the programs can be held in another information recording medium that is readable by control system 50, such as flash ROM 55, an optical disk readable by optical disk device 81, a memory card inserted in slot 96, etc.

### C. Data structures

In this embodiment, application table 23, menu information table 24, and device table 25 are memory areas dynamically allocated in main memory 53. But this invention is not limited to this; they may be allocated in other areas, such as flash ROM 55. Also, an application module 26, which is the memory area that holds the programs, etc. for each application to be operated, is provided in advance.

### (C-1) Application module 26

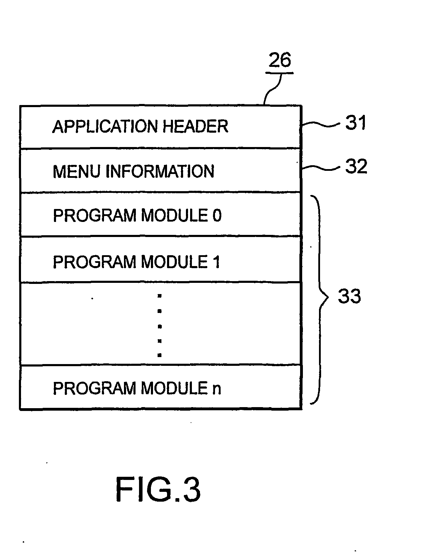

As shown in Figure 3, the application module 26 has an application header memory area 31 for the application header, a menu information memory area 32 for menu information, which is information for menu display of the application; and a memory area 33 for program modules for operating the application.

Registered in application header memory area 31 are the application name and version, and a table of hardware necessary for operation of the application, etc. As menu information, two- or three-dimensional image data for menu display, display programs, and text data, etc. can be held as appropriate in menu information memory area 32; its content can be appropriately determined in accordance with the content of the display processing by menu creation unit 22.

Application module 26 may be held in an internal memory device such as ROM 54 or flash ROM 55, as pictured in Figure 2 as application module 26a, or it may be held outside of entertainment device 1, as shown as application modules 26b and 26c.

For example, what may be used as media for holding application modules 26b and 26c includes an external auxiliary memory device inserted into slot 96 of communication controller 90, an external memory device (hard disk drive, etc.) connected via PCMCIA slot 95, or an optical disk mounted on optical disk device 81 of optical disk controller 80. If a modem card or other communication device is inserted into PCMCIA slot 95, application module 26b may be held in an external network that is connectable via this, or application module 26b may be held in an external device connected to external device connection terminal 93 or an external device with which communication can be done via communication terminal 94.

In Figure 2, application modules 26a to 26c are all provided, but this invention is not limited to this; it is not necessary that all of them be present. It suffices to hold application module 26, which corresponds to the desired applications as appropriate, in a memory device that operation controller 21 can access.

There are no particular restrictions on the types of applications. Cited in this working example as applications that are started by a menu are a CD player that plays audio CDs (Compact Disks), a DVD player that plays DVDs (Digital Video Disks) and DVD audio disks, memory card utilities for copying, deleting, etc. information held on a memory card, a clock that displays the current time, and communications tools (mailer, browser, etc.) for communicating via the Internet or other network.

### (C-2) Application table 23

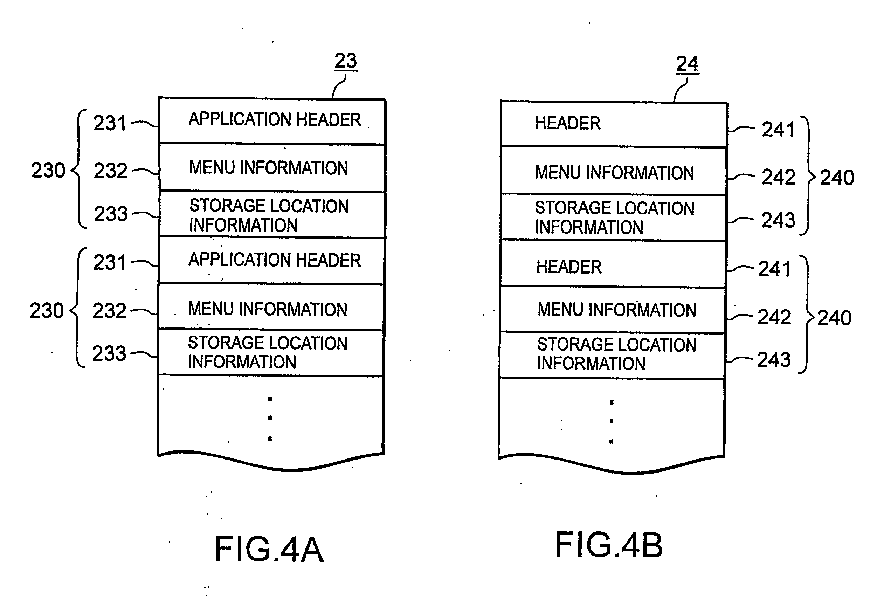

As shown in Figure 4(a), in application table 23, an application information memory area 230 is provided for each operable application, and each application information memory area 230 has an application header memory area 231, a menu information memory area 232, and an information memory area 233 that indicates the storage locations of the application modules.

### (C-3) Menu information table 24

As shown in Figure 4(b), in menu information table 24, a display item information memory area 240 is provided for each operable application, and each display item information memory area 240 has a header memory area 241 that holds the size, etc. of the display item information memory area 240, a menu information memory area 242, and an information memory area 243 of the locations where the programs of the applications that indicate the display item information are stored.

### (C-4) Device information table 25

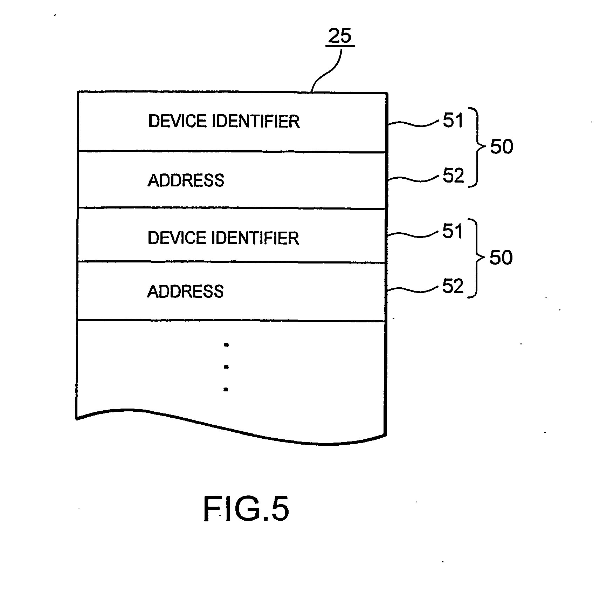

Device information table 25 is a table that gives a list of the peripheral devices, etc. that are connected. As shown in Figure 5, for each device a peripheral device information memory area 50 is provided that has an identifier memory area 51 that denotes the device and an address information memory area 52 that indicates the connection location of the device.

### D. Processing procedure

With entertainment device 1 of this embodiment, when the power is turned on, first, operation controller 21 is started.

### (D-1) Processing by operation controller 21

### a. Overall flow

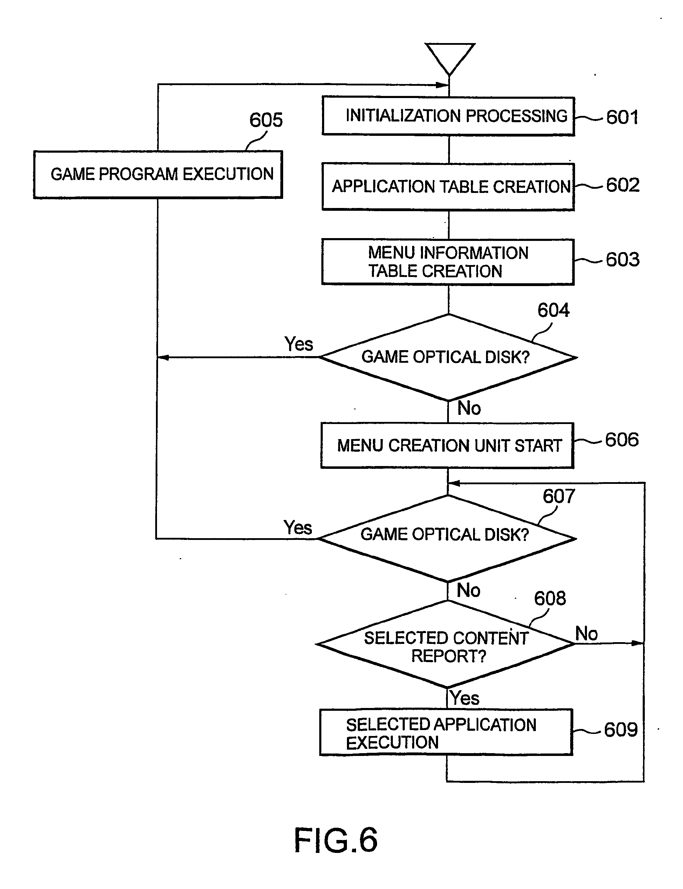

As shown in Figure 6, in operation controller 21 that has been started, first, operation confirmation and other prescribed initialization processing is done (step 601), application table 23 is created (step 602), then, based on this application table 23, a menu information table is created (step 603), then, if a game optical disk is mounted on optical disk device 81 of optical disk controller 80 (step 604), the game program is executed by game execution unit 20 (step 605), and when the game ends, processing is returned to step 601. In the initialization processing, etc. in step 601, operation controller 21 may output sound data via sound controller 70 or output image data via image controller 60. Also, application table creation processing (step 602) and menu information table creation processing (step 603) may be executed as part of the initialization processing (step 601).

In step 605, started game execution unit 20 reads via optical disk controller 80 the game program held on the optical disk, and in response to input received via communication controller 90, executes the program while controlling the operation of image controller 60 and sound controller 70.

In step 604, if no game optical disk has been mounted, operation controller 21 starts menu creation unit 22 and waits for a response from menu creation unit 22 (step 606).

Here, if operation controller 21 detects that a game optical disk has been mounted on optical disk device 81 of optical disk controller 80 (step 607), processing proceeds to step 605 and game execution unit 20 is made to execute the game program.

If in step 607 no game optical disk has been mounted, then if there is a report of an application selected from menu creation unit 606 (step 608), then, referencing storage location information memory area 233 in application table 23 that corresponds to the selected application, the selected operation is started (step 609), and processing is returned to step 607.

In this embodiment, if in step 607 it is detected that a game optical disk has been mounted, the game program is executed (step 605), but instead of this, operation controller 21 may report to menu creation 22 that a game optical disk has been mounted, and game display items made be added to the menu displayed by menu creation unit 22, which receives this report.

### b. Application table creation processing (step 602)

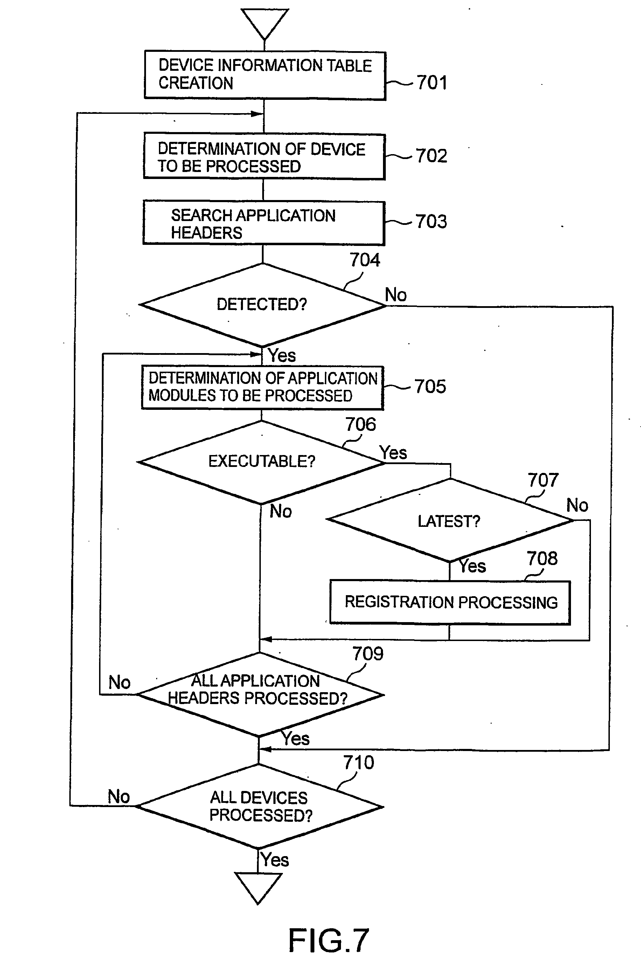

Next, with reference to Figure 7, the processing of operation controller 21 in step 602 will be described.

In step 602, operation controller 21 first reserves in main memory 53 areas for application table 23 and device information table 25, then acquires the hardware configuration of peripheral devices, etc. connected to communication controller 90, etc., and creates device information table 25 based on the detected peripheral device information (step 701).

Next, operation controller 21 takes for processing any of what is unprocessed among all the devices that have a built-in or connected recording medium, such as ROM 54, flash ROM 55, optical disk mounted on optical disk device 81, memory card inserted in slot 96, external memory device inserted in PCMCIA slot 95, or external devices connected to external device connection terminal 93 (step 702), and looks up whether application module 26 is being held in the storage medium of said device (that is, whether application header is holding it) in step 703.

Here, if no application module 26 is detected at all (step 704), operation controller 21 ends the device information table creation processing if all the above devices have been processed, and returns to step 702 if any unprocessed device remains (step 710).

In step 703, if an application module 26 is detected (step 704), operation controller 21, taking an application module as what is to be processed (step 705), compares with the content of device information table 701 the hardware necessary for execution that is held in an application header memory area 31 of said application module, and decides whether said application is executable (step 706).

In step 706, upon deciding that it is not executable, operation controller 21 advances the processing to step 701 if no unprocessed application module remains in the device to be processed, returns processing to step 705 if an unprocessed application module remains (step 709).

In step 706, upon deciding that it is executable, operation controller 21 decides whether the application registered in the application module to be processed is the latest (step 707). That is, operation controller 21 checks whether the application name held in application header memory area 31 of the application module to be processed is already registered in the application table. If it is not, operation controller 21 takes the application module currently to be processed as the latest. And if an application of the same name has already been registered, it is decided whether it is the latest by comparing the version information held in application header memory area 31 of the application module to be processed and the version information held in application header memory area 231 of application table 23.

Here, if it is judged not be the latest, operation controller 21 advances the processing to step 709. And if it is judged to be the latest, operation controller 21 registers the application module in application table 23 (step 708). That is, in step 708, operation controller 21 newly reserves application information memory area 230 in application table 23, stores information read from application module 26 into application header storage area 231 and into menu information storage area 232, and stores in storage location information memory area 233 information indicating the storage location of said application module 26. When this registration processing (step 708) ends, operation controller advances the processing to step 709.

If there is no need to determine whether operation is possible due to the hardware environment, device information table creation processing (step 701) and processing to judge whether it is executable (step 706) can be omitted.

In this embodiment, the latest-version application is selected and registered in the application table, but one may also judge the state of conflict between the present device configuration (system configuration) of entertainment device 1 and other applications and, for example, select the optimum application that does not conflict with other applications.

### c. Menu information table creation processing (step 603)

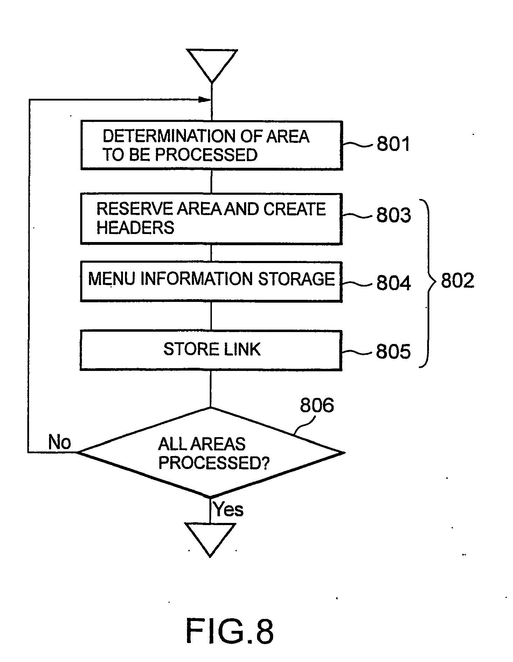

Next, with reference to Figure 8 the processing of operation controller 21 in step 603 will be described.

In step 603, operation controller 21 first reserves in main memory 53 an area for menu information table 24, then takes one of the application information memory areas 230 of application table 23 to process (step 801), registers the application registered in that memory area 230 in menu information table 24 (step 802), and if any unprocessed application information memory area 230 remains (step 806), returns the processing to step 801 and repeats the registration processing (step 802), and if all the application information memory areas 230 have been processed (step 806), ends the processing of step 603.

The registration processing in step 802 is as follows. In step 802, first, operation controller 21 reserves in menu information table 24 a new display item information memory area 240, creates a header, stores it in header memory area 241 (step 802), then stores the information read from menu information memory area 232 of application table 23 into menu information memory area 242 of display item information memory area 240 (step 804), and stores the information read from storage location information memory area 233 of application table 23 into storage location information memory area 243 of display item information memory area 240 (step 805).

### (D-2) Processing by menu creation unit 22

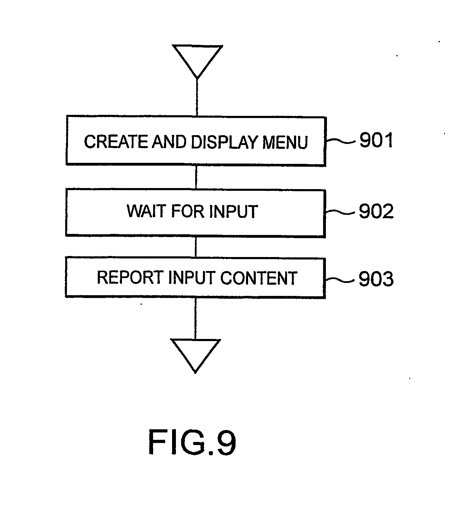

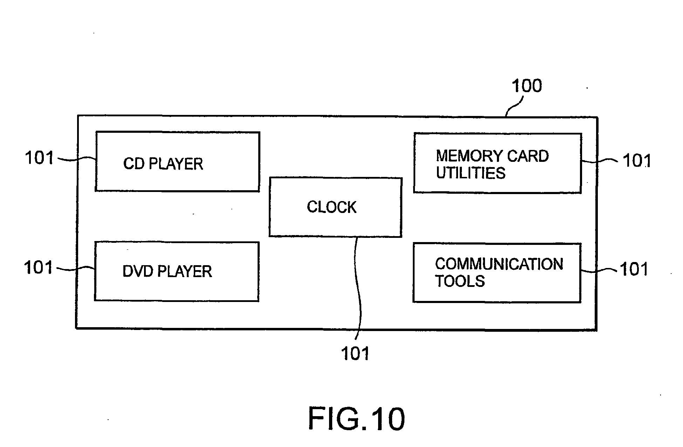

As shown in Figure 9, menu creation unit 22, which is called from operation controller 21 in step 606, references the display item information memory areas 240 of menu information table 24, and based on the information held in menu information memory area 242, creates a display item for each applications, creates a menu screen so that the display item is displayed in the prescribed position on the display screen, and outputs it via image processing unit 60 (step 901). Figure 10 shows an example of display screen 100 at this time. In this working example, each individual display item 101 has its selected area, and it is possible to receive the selection by a controller or other input device connected to slot 96.

Next, operation controller 21 waits for input of a selection of one of the display items 101 to be made via the communication controller 90 (step 902), and when it is input, reports the selected application to operation controller 21 (step 903).

If an application to be started is selected, menu creation unit 22 reports the selected application to operation controller 21, but it could, for example, read the storage location information of said selected application from storage location information memory area 243 of menu information table 24 and report this storage location information to operation controller 21.

There are no particular restrictions on the display item 101 creation method and menu display method in step 901, but if for example a character string is used as the menu information, the menu could be made by showing a table of character strings which are display items 101, as shown in Figure 10. If two- or three-dimensional image data is used, the two- or three-dimensional images could be made into display items, and these images could be made into a menu lined up on the screen. Also, if a program is used in which the operation of display images is defined as menu information, images that operate could be made into display items, and a menu screen could be made by listing these, etc. Also, as display items of the menu one could use, besides character strings or images, sound data output via sound controller 70.

In this way, in this working example, menu information is held for each application, and because the menu is displayed using this, menu items (display items) are automatically added or modified as applications are added or modified.

Also, when creating the application table, only executable applications are extracted, so even if the hardware configuration is modified, the content of the menu to be displayed is also automatically modified to fit said modifications.

Also, in creating the application table, applications are extracted based on version information, so the latest and/or optimum application can be started at all times, and updating of application versions can be handled automatically.

Furthermore, in this embodiment, a predetermined menu is not displayed, but rather the menu is created dynamically by menu creation unit 22, so a variety of expression formats can be adopted, not limited to character strings, etc.

As described above, the present invention makes it possible to modify the menu display from time to time in accordance with actually realizable functions, to add or modify functions after shipment, and to dynamically handle display modifications, etc.

## Claims

1. An entertainment device comprising:
an operation controller (21) for referencing application modules (26) that hold application programs for each application and for extracting or detecting applications; and
a menu creation unit (22) that creates and displays a menu of at least some of said extracted or detected applications and accepts a selection of the application to be started,
**characterized in that**
said application modules (26) each holds required hardware information concerning the hardware necessary for the operation of the application, and
said operation controller (21) is configured to decide whether said application is executable, based on information on devices to which said entertainment device is connected and said required hardware information held in said application module (26), and to extract for inclusion in the menu created and displayed by the menu creation unit (22) the applications which it judges to be executable.

2. The entertainment device as described in claim 1, wherein
said application module (26) holds application version information, and
said operation controller (21), upon detecting multiple application modules (26) in which the same application is registered, extracts a new-version application based on said version information.

3. The entertainment device as described in claim 1, wherein
said operation controller (21), upon detecting said multiple application modules (26) in which the same application is registered, extracts from among said multiple application modules (26) the best one for the environment of the entertainment device.

4. The entertainment device as described in claim 1, wherein
said application modules (26) also have menu information for menu display, and
said menu creation unit (22) creates said menu based on said menu information.

5. The entertainment device as described in claim 1, wherein
said application modules (26) are held in at least one of an external storage medium connected to the entertainment device, a storage medium mounted on the entertainment device, a storage medium built into the entertainment device and a storage medium on an external network, and
said operation controller (21) includes means that searches at least one of said external storage medium, said mounted storage medium, the built-in storage medium and said storage medium on the external network, and detects said application modules (26).

6. The entertainment device as described in claim 1 wherein
said application modules (26) further hold for each application menu information for menu display;
said operation controller (21) prepares a menu information table in which menu information for each application is registered; and
said menu creation unit (22) that references said menu information table, creates and displays the menu of applications based on the menu information registered in said menu information table.

7. The entertainment device as described in claim 6, wherein said menu information is two- or three-dimensional image data.

8. The entertainment device as described in claim 6, wherein said menu information is at least one of display programs, text data and two- or three-dimensional image data.

9. A method of displaying a menu in an entertainment device comprising the steps of:
referencing application modules (26) that hold application programs for each application said application modules (26) each holding required hardware information concerning the hardware necessary for the operation of the application,
creating and displaying a menu of at least some of said extracted or detected applications,
deciding whether an application is executable, based on information on devices to which said entertainment device is connected and said required hardware information held in said application module (26), and
extracting the applications that are judged to be executable for inclusion in the menu created and displayed.

10. The method of displaying a menu as described in claim 9 wherein:
said application modules (26) further holds for each application menu information for menu display,
said step of referencing application modules (26) includes creating a menu information table in which menu information for each application is registered, and
said step of creating and displaying the menu includes referencing said menu information table and, based on the menu information registered in said menu information table, creating and displaying the menu of applications.

11. The method of displaying a menu as described in claim 9, wherein:
said application modules (26) are held in at least one of an external storage medium connected to the entertainment device, a storage medium mounted on the entertainment device, a storage medium of a memory device built into the entertainment device, and a storage medium on an external network; and
said step of referencing application modules (26) includes searching at least one of said external storage medium, said mounted storage medium, the built-in storage medium and a storage medium on the external network, and detecting said application modules (26).

12. A computer-readable and executable software program for realizing a menu display method, said program being operative to perform the steps of any of claims 9 to 11.

## Patentansprüche

1. Unterhaltungsgerät umfassend:
einen Betriebskontroller (21) zum Referenzieren von Anwendungsmodulen (26), die Anwendungsprogramme für jede Anwendung halten, und um Anwendungen zu extrahieren oder zu detektieren; und
eine Menü-Erstellungseinheit (22), die ein Menü von wenigstens einigen der extrahierten oder detektierten Anwendungen erstellt und anzeigt und eine Auswahl einer zu startenden Anwendung annimmt, **dadurch gekennzeichnet, dass**
die Anwendungsmodule (26) jeweils erforderliche Hardwareinformation halten, die die Hardware betrifft, die zum Betrieb der Anwendung erforderlich ist, und dass
der Betriebskontroller (21) konfiguriert ist, um zu entscheiden, ob die Anwendung ausführbar ist, auf der Grundlage von der Information über die Vorrichtungen, mit denen das Unterhaltungsgerät verbunden ist, und der erforderlichen Hardwareinformation, die in dem Anwendungsmodul (26) gehalten wird, und um die Anwendungen, die sie als ausführbar beurteilt, zum Einfügen in das Menü zu extrahieren, das durch die Menü-Erstellungseinheit (22) erstellt und angezeigt wird.

2. Unterhaltungsgerät nach Anspruch 1, worin
das Anwendungsmodul (26) Anwendungsversionsinformation hält, und worin
der Betriebskontroller (21) beim Detektieren mehrerer Anwendungsmodule (26), in denen dieselbe Anwendung registriert ist, eine Anwendung neuer Version auf der Grundlage der Versionsinformation extrahiert.

3. Unterhaltungsgerät nach Anspruch 1, worin
der Betriebskontroller (21) beim Detektieren der mehreren Anwendungsmodule (26), in denen dieselbe Anwendung registriert ist, aus den mehreren Anwendungsmodulen (26) die beste für die Umgebung des Unterhaltungsgeräts extrahiert.

4. Unterhaltungsgerät nach Anspruch 1, worin
die Anwendungsmodule (26) auch Menüinformation zur Menüanzeige haben, und worin die Menü-Erstellungseinheit (22) das Menü auf der Grundlage der Menüinformation erstellt.

5. Unterhaltungsgerät nach Anspruch 1, worin
die Anwendungsmodule (26) wenigstens in einem externen, mit dem Unterhaltungsgerät verbundenen Speichermedium und/oder einem auf dem Unterhaltungsgerät montierten Speichermedium und/oder einem in das Unterhaltungsgerät eingebauten Speichermedium und/oder einem Speichermedium auf einem externen Netzwerk gehalten werden, und worin
der Betriebskontroller (21) Mittel umfasst, die wenigstens das externe Speichermedium und/oder das montierte Speichermedium und/oder das eingebaute Speichermedium und/oder das Speichermedium auf dem externen Netzwerk durchsucht und die Anwendungsmodule (26) detektiert.

6. Unterhaltungsgerät nach Anspruch 1, worin
die Anwendungsmodule (26) ferner für jede Anwendung eine Menüinformation zur Menüanzeige hält;
der Betriebskontroller (21) eine Menüinformationstabelle vorbereitet, in der die Menüinformation für jede Anwendung registriert ist; und worin
die Menü-Erstellungseinheit (22), die einen Bezug zu der Menüinformationstabelle herstellt, das Menü der Anwendungen auf der Grundlage der Menüinformation, die in der Menüinformationstabelle registriert ist, erstellt und anzeigt.

7. Unterhaltungsgerät nach Anspruch 6, worin die Menüinformation zwei- oder drei-dimensionale Bilddaten umfasst.

8. Unterhaltungsgerät nach Anspruch 6, worin die Menüinformation wenigstens Anzeigeprogramme und/oder Textdaten und/oder zwei- oder drei-dimensionale Bilddaten umfasst.

9. Verfahren zum Anzeigen eines Menüs in einem Unterhaltungsgerät umfassend die Schritte:
Referenzieren von Anwendungsmodulen (26), die Anwendungsprogramme für jede Anwendung halten, wobei die Anwendungsmodule (26) jeweils eine erforderliche Hardwareinformation halten, die die Hardware betrifft, die zum Betreiben der Anwendung erforderlich ist,
Erstellen und Anzeigen eines Menüs von wenigstens einigen der extrahierten oder detektierten Anwendungen,
Entscheiden, ob eine Anwendung ausführbar ist auf der Grundlage der Information über die Vorrichtungen, mit denen das Unterhaltungsgerät verbunden ist, und der erforderlichen Hardwareinformation, die in dem Anwendungsmodul (26) gehalten wird, und
Extrahieren der Anwendungen, die als ausführbar beurteilt werden, zum Einfügen in das erzeugte und angezeigte Menü.

10. Verfahren zum Anzeigen eines Menüs nach Anspruch 9, worin:
die Anwendungsmodule (26) für jede Anwendung eine Menüinformation zur Menüanzeige halten,
der Schritt der Referenzierung der Anwendungsmodule (26) das Erstellen einer Menüinformationstabelle umfasst, in der die Menüinformation für jede Anwendung registriert ist, und worin
der Schritt der Erzeugung und Anzeige des Menüs die Referenzierung der Menüinformationstabelle und auf der Grundlage der Menüinformation, die in der Menüinformationstabelle registriert ist, das Erzeugen und Anzeigen des Menüs der Anwendungen umfasst.

11. Verfahren zum Anzeigen eines Menüs nach Anspruch 9, worin:
die Anwendungsmodule (26) wenigstens in einem mit dem Unterhaltungsgerät verbundenen externen Speichermedium und/oder einem auf dem Unterhaltungsgerät montierten Speichermedium und/oder einem Speichermedium einer in das Unterhaltungsgerät eingebauten Speichervorrichtung und/oder einem Speichermedium auf einem externen Netzwerk gehalten werden; und worin
der Schritt der Referenzierung der Anwendungsmodule (26) das Durchsuchen des externen Speichermediums und/oder des montierten Speichermediums und/oder des eingebauten Speichermediums und/oder eines Speichermediums auf einem externen Netzwerk und das Detektieren der Anwendungsmodule (26) umfasst.

12. Computerlesbares und -ausführbares Softwareprogramm zur Realisierung eines Menüanzeigeverfahrens, wobei das Programm zu betreiben ist, um die Schritte nach einem der Ansprüche 9 bis 11 auszuführen.

## Revendications

1. Dispositif de divertissement comprenant :
un contrôleur d'exploitation (21) destiné à faire référence à des modules d'application (26) qui contiennent des programmes d'application pour chaque application et destiné à extraire ou détecter des applications, et
une unité de création de menu (22) qui crée et affiche un menu d'au moins certaines desdites applications extraites ou détectées et accepte une sélection de l'application devant être lancée, **caractérisé en ce que**
lesdits modules d'application (26) contiennent chacun des informations de matériel requises concernant le matériel nécessaire pour l'opération de l'application, et
ledit contrôleur d'exploitation (21) est configuré pour déterminer si ladite application est exécutable, sur la base d'informations concernant les dispositifs auxquels ledit dispositif de divertissement est connecté et desdites informations de matériel requises contenues dans ledit module d'application (26), et pour extraire, en vue d'une inclusion dans le menu créé et affiché par l'unité de création de menu (22), les applications qu'il évalue comme étant exécutables.

2. Dispositif de divertissement selon la revendication 1, dans lequel
ledit module d'application (26) contient des informations de version d'application, et
ledit contrôleur d'exploitation (21), lors de la détection de multiples modules d'application (26) dans lesquels la même application est enregistrée, extrait une application de nouvelle version sur la base desdites informations de version.

3. Dispositif de divertissement selon la revendication 1, dans lequel
ledit contrôleur d'exploitation (21), lors de la détection desdits multiples modules d'application (26) dans lesquels la même application est enregistrée, extrait parmi lesdits multiples modules d'application (26), le meilleur pour l'environnement du dispositif de divertissement.

4. Dispositif de divertissement selon la revendication 1, dans lequel
lesdits modules d'application (26) comportent également des informations de menu pour l'affichage du menu, et
ladite unité de création de menu (22) crée ledit menu sur la base desdites informations de menu.

5. Dispositif de divertissement selon la revendication 1, dans lequel
lesdits modules d'application (26) sont contenus dans au moins l'un d'un support de mémorisation externe connecté au dispositif de divertissement, d'un support de mémorisation monté sur le dispositif de divertissement, d'un support de mémorisation incorporé dans le dispositif de divertissement et d'un support de mémorisation sur un réseau externe, et
ledit contrôleur d'exploitation (21) comprend un moyen qui recherche au moins l'un dudit support de mémorisation externe, dudit support de mémorisation monté, dudit support de mémorisation incorporé et dudit support de mémorisation sur le réseau externe, et détecte lesdits modules d'application (26).

6. Dispositif de divertissement selon la revendication 1, dans lequel
lesdits modules d'application (26) contiennent en outre, pour chaque application, des informations de menu pour l'affichage du menu,
ledit contrôleur d'exploitation (21) prépare une table d'informations de menu dans laquelle des informations de menu pour chaque application sont enregistrées, et
ladite unité de création de menu (22) qui fait référence à ladite table d'informations de menu, crée et affiche le menu d'applications sur la base des informations de menu enregistrées dans ladite table d'informations de menu.

7. Dispositif de divertissement selon la revendication 6, dans lequel lesdites informations de menu sont des données d'image à deux dimensions ou à trois dimensions.

8. Dispositif de divertissement selon la revendication 6, dans lequel lesdites informations de menu constituent au moins un élément parmi des programmes d'affichage, des données de texte et des données d'image à deux dimensions ou à trois dimensions.

9. Procédé d'affichage d'un menu dans un dispositif de divertissement comprenant les étapes consistant à :
faire référence aux modules d'application (26) qui contiennent les programmes d'application pour chaque application, lesdits modules d'application (26) contenant chacun des informations de matériel requises concernant le matériel nécessaire pour l'opération de l'application,
créer et afficher un menu d'au moins certaines desdites applications extraites ou détectées,
déterminer si une application est exécutable, sur la base des informations concernant les dispositifs auxquels ledit dispositif de divertissement est connecté, et desdites informations de matériel requises contenues dans ledit module d'application (26), et
extraire les applications qui sont évaluées comme étant exécutables en vue d'une inclusion dans le menu créé et affiché.

10. Procédé d'affichage d'un menu selon la revendication 9, dans lequel :
lesdits modules d'application (26) contiennent en outre pour chaque application, des informations de menu pour l'affichage du menu,
ladite étape consistant à faire référence aux modules d'application (26) comprend la création d'une table d'informations de menu dans laquelle les informations de menu pour chaque application sont enregistrées, et
ladite étape de création et d'affichage du menu comprend le fait de faire référence à ladite table d'informations de menu et, sur la base des informations de menu enregistrées dans ladite table d'informations de menu, la création et l'affichage du menu d'applications.

11. Procédé d'affichage d'un menu selon la revendication 9, dans lequel:
lesdits modules d'application (26) sont contenus dans au moins l'un d'un support de mémorisation externe connecté au dispositif de divertissement, d'un support de mémorisation monté sur le dispositif de divertissement et d'un support de mémorisation d'un dispositif de mémoire incorporé dans le dispositif de divertissement et d'un support de mémorisation sur un réseau externe, et
ladite étape consistant à faire référence aux modules d'application (26) comprend la recherche d'au moins l'un dudit support de mémorisation externe, dudit support de mémorisation monté, du support de mémorisation incorporé et d'un support de mémorisation sur le réseau externe, et la détection desdits modules d'application (26).

12. Programme logiciel exécutable et pouvant être lu par un ordinateur destiné à réaliser un procédé d'affichage de menu, ledit programme pouvant être mis en oeuvre pour exécuter les étapes selon l'une quelconque des revendications 9 à 11.
